# EUROPEAN PATENT APPLICATION

(11) **EP 3 101 547 A1**
(43) Date of publication of application: **07.12.2016**
(21) Application number: 15761547.7
(22) Date of filing: 14.01.2015
(51) Int. Cl.: G06F 11/34, G05B 23/02, G06F 11/32

(54) **CONTROL SYSTEM, METHOD, PROGRAM AND INFORMATION PROCESSING DEVICE**

(30) Priority: 14.03.2014 JP 2014052631
(71) Applicant: Omron Corporation, Kyoto-shi, Kyoto 600-8530 (JP)
(72) Inventor: YAOITA, Koji, Kyoto-shi Kyoto 600-8530 (JP); KOJIMA, Tatsuya, Kyoto-shi Kyoto 600-8530 (JP)
(74) Representative: Horn Kleimann Waitzhofer Patentanwälte PartG mbB
(86) International application number: PCT/JP2015/050797
(87) International publication number: WO 2015/136959

(57) **Abstract**

A controller (104) stores link information (185) linking a predetermined event to a variable associated with the event. The controller (104) stores first log information in association with time information into a memory (911) in response to occurrence of the predetermined event (905). The first log information includes information about the event, and a current value of a predetermined variable associated with the event included in the link information (185). The controller (104) stores second log information in association with time information into a memory (128) in accordance with a predetermined period. The second log information includes information about a value of the predetermined variable. An information processing device (300) obtains the link information (185) from the controller, and displays information indicating the variable associated with an event indicated by the first log information onto the monitor (314) based on the link information and the second log information.

## Description

### FIELD

The present invention relates to a control system including a controller for executing a user program either periodically or as an occasional event, and an information processing device in the control system.

### BACKGROUND

Machines and equipment used at many production sites are typically controlled by control systems mainly including controllers such as programmable controllers, or programmable logic controllers (PLCs). Such control systems have various log output functions to enable failures during system configuration or during operation to be investigated later.

A PLC enables data tracing of changes in variables caused by execution of a user program. When, for example, a trace sampling instruction included in the user program is executed, the PLC collects variables to be referred to and to be updated by the user program. For example, the variables are traced to debug the program. In executing a program, for example, data is collected at the timing of program execution or data input.

A technique associated with a controller with the above functions is described in, for example, Japanese Unexamined Patent Application Publication No. 2012-194680 (Patent Literature 1). This technique is used for a user program including trace sampling instructions, and allows a user to identify a trace sampling instruction and its resultant collected data in a PLC that controls the operation of a device.

### CITATION LIST

### PATENT LITERATURE

Patent Literature 1: Japanese Unexamined Patent Application Publication No. 2012-194680

### SUMMARY

### TECHNICAL PROBLEM

A controller may have various events occurring in accordance with program execution, the communication status of the network, and the external environment. When an event occurs, the states of variables may be determined to identify a cause of the event, reproduce the operating status of the PLC at the occurrence of the event, and check the operating status of the PLC immediately before the event occurs.

However, controllers known in the art may refer to a series of data indicating the values of variables associated with the event at the timing when the event occurs, and collate the data using the event occurrence timing and the details of the event to check the data. This involves complicated procedures.

One or more aspects of the present invention are directed to a control system, a method, a program, and an information processing device that easily obtain, when an event occurs, the status of a controller at the occurrence of a cause of the event.

### SOLUTION TO PROBLEM

A control system according to one aspect of the invention includes a controller that executes a user program periodically or as an occasional event, and an information processing device connectable to the controller. The controller includes a first storage unit, a second writing unit, and a third writing unit. The first storage unit stores link information linking a predetermined event to a variable associated with the event. The first writing unit writes first log information in association with time information into the first storage unit in response to occurrence of the predetermined event. The first log information includes information about the event, and a current value of a predetermined variable associated with the event included in the link information. The second writing unit writes second log information in association with time information into the first storage unit in accordance with a predetermined period. The second log information includes information about a value of the predetermined variable. The information processing device includes a communication unit that obtains the first log information and the second log information from the controller, a monitor that displays information, a second storage unit that stores the link information, and a control unit that controls an operation of the information processing device. The control unit includes a long display unit and a link display unit. The log display unit displays the first log information obtained from the communication unit onto the monitor. The first log information includes the information about the event, and the value of the predetermined variable associated with the event at occurrence of the event included in the link information. The link display unit displays, based on the link information and the second log information, information indicating the value of the predetermined variable linked to the information about the event included in the first log information onto the monitor.

In some embodiments, the control unit in the information processing device includes a link information generator that generates the link information in response to an input operation for editing a correspondence between the event and designation of the variable. The control unit transmits the link information generated by the communication unit to the controller. The controller receives the link information from the information processing device and stores the link information. The controller transmits the first log information, the second log information, and the link information to the information processing device when receiving a request for the first log information, the second log information, and the link information from the information processing device. The control unit in the information processing device receives the link information from the controller, and stores the received link information into the second storage unit.

In some embodiments, the link display unit in the information processing device displays the value of the variable linked to the information about the event included in the first log information onto the monitor in response to an input operation for displaying the value of the variable.

In some embodiments, the link information includes a range of time information associated with the value of the variable linked to the event. The control unit generates the link information including the range of time information associated with the value of the variable linked to the event, in response to an input operation for editing a correspondence between the event and designation of the variable. The link display unit displays, onto the monitor, the value of the variable linked to the information about the event in accordance with the range of time information included in the link information.

A method according to another aspect of the invention is a method for displaying a log of a control system. The control system includes a controller that executes a user program periodically or as an occasional event, and an information processing device connectable to the controller. The controller includes a first storage unit that stores link information linking a predetermined event to a variable associated with the event. The information processing device includes a second storage unit that stores the link information and a monitor. The method includes causing the controller to write first log information including information about the event in association with time information into the first storage unit in response to occurrence of the predetermined event, and a current value of a predetermined variable associated with the event included in the link information, causing the controller to write second log information including information about a value of the predetermined variable in association with time information into the first storage unit in accordance with a predetermined period, causing the information processing device to obtain the first log information and the second log information from the controller, causing the information processing device to display the first log information obtained from the communication unit onto the monitor including the information about the event and the value of the predetermined variable associated with the event at occurrence of the event included in the link information, and causing the information processing device to display, based on the link information and the second log information, information indicating the value of the predetermined variable linked to the information about the event included in the first log information onto the monitor.

An information processing device according to another aspect of the invention is an information processing device for a control system including a controller that executes a user program periodically or as an occasional event. The information processing device is connectable to the controller. The controller includes a first storage unit, a first writing unit, and a second writing unit. The first storage unit stores link information linking a predetermined event to a variable associated with the event. The first writing unit that writes first log information in association with time information into the first storage unit in response to occurrence of the predetermined event. The first log information includes information about the event, and a current value of a predetermined variable associated with the event included in the link information. The second writing unit writes second log information in association with time information into the first storage unit in accordance with a predetermined period. The second log information includes information about a value of the predetermined variable. The information processing device includes a communication unit that obtains the first log information and the second log information from the controller, a monitor that displays information, a second storage unit that stores the link information, and a control unit that controls an operation of the information processing device. The control unit includes a log display unit and a link display unit. The log display unit displays the first log information obtained from the communication unit onto the monitor. The first log information includes the information about the event, and the value of the predetermined variable associated with the event at occurrence of the event included in the link information. The link display unit displays, based on the link information and the second log information, information indicating the value of the predetermined variable linked to the information about the event included in the first log information onto the monitor.

A program according to another aspect of the invention is a program for controlling an operation of an information processing device in a control system including a controller that executes a user program periodically or as an occasional event. The information processing device is connectable to the controller. The controller includes a first storage unit, a first writing unit, and a second writing unit. The first storage unit stores link information linking a predetermined event to a variable associated with the event. The first writing unit writes first log information in association with time information into the first storage unit in response to occurrence of the predetermined event. The first log information includes information about the event, and a current value of a predetermined variable associated with the event included in the link information. The second writing unit writes second log information in association with time information into the first storage unit in accordance with a predetermined period. The second log information includes information about a value of the predetermined variable. The information processing device includes a second storage unit, a processor, and a monitor. The second storage unit stores link information linking the event and designation of the variable. The program causes the processor to implement obtaining the first log information and the second log information from the controller, displaying the information about the event included in the obtained first log information, and displaying, based on the link information and the second log information, information indicating the value of the variable linked to the information about the event included in the first log information onto the monitor.

### ADVANTAGEOUS EFFECTS

One or more embodiments of the present invention allow, when an event occurs, the status of a controller at occurrence of the event to be obtained easily, and allow efficient debugging of programs or other processing.

### BRIEF DESCRIPTION OF THE DRAWINGS

Fig. 1 is a schematic diagram showing the system configuration of a control system 1 according to one embodiment.
Fig. 2 is a schematic diagram showing the hardware configuration including the main components of a PLC 100 according to the embodiment.
Fig. 3 is a schematic diagram showing the software configuration of the PLC 100 according to the embodiment.
Fig. 4 is a schematic diagram showing the hardware configuration of a support apparatus 300 connected to the PLC 100.
Fig. 5 is a block diagram describing the log output function of a CPU 104 according to the embodiment.
Fig. 6 is a diagram showing link information 185.
Fig. 7 is a diagram describing an example user interface for receiving an input operation to edit link information 185 included in the support apparatus 300 according to the embodiment.
Fig. 8 is a flowchart showing the processing performed by the PLC 100 according to the embodiment.
Fig. 9 is a flowchart showing the processing performed by the PLC 100 according to the embodiment.
Fig. 10 is a diagram showing an example user interface for obtaining and displaying an operation log 184 included in the support apparatus 300 according to the embodiment.
Figs. 11A and 11B are diagrams showing changes in the user interface screen.

### DETAILED DESCRIPTION

Embodiments of the present invention will now be described in detail with reference to the drawings. The same or corresponding components in the figures are given the same reference numerals, and will not be described redundantly.

### A. System Configuration

The system configuration of a control system according to one embodiment will now be described. In the present embodiment, a programmable logic controller (PLC) for controlling a control target such as a machine or equipment will be described as a typical example of a controller. The controller according to one or more embodiments of the present invention may not be a PLC, and may be one of various other controllers.

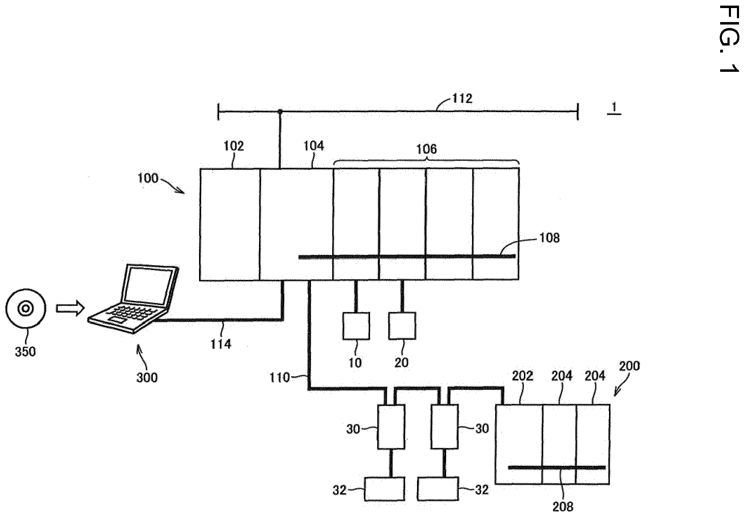

Fig. 1 is a schematic diagram showing the system configuration of a control system 1 according to the present embodiment. Referring to Fig. 1, the control system 1 includes a PLC 100 and a support apparatus 300 connected to the PLC 100. The PLC 100 executes a user program (described later) either periodically or as an occasional event.

The support apparatus 300 is a typical example of an information processing device connectable to the PLC 100. The support apparatus 300 is connected to the PLC 100 via a connection cable 114 to provide functions associated with the PLC 100, including settings of parameters, programming, monitoring, and debugging. The PLC 100 and the support apparatus 300 are typically connected to each other in a communicable manner in accordance with the USB (Universal Serial Bus) specifications.

The PLC 100 includes a central processing unit (CPU) 104, which performs control computations, and at least one input/output (IO) unit 106. Those units can transmit and receive data between them with a PLC system bus 108. These units receive power with an appropriate voltage supplied from a power supply unit 102.

In the control system 1, the PLC 100 transmits and receives data to and from various field devices, via the IO units 106 (connected with the PLC system bus 108), and/or with a field bus 110. These field devices include an actuator that processes a control target or a sensor that obtains various information from a control target. Examples of these field devices shown in Fig. 1 include a detection switch 10, a relay 20, and servo motor drivers 30 for driving motors 32. The PLC 100 is also connected to a remote IO terminal 200 with the field bus 110. The remote IO terminal 200 basically performs typical input and output processes in the same manner as the IO units 106. More specifically, the remote IO terminal 200 includes a communication coupler 202 for performing processing associated with data transfer with the field bus 110, and at least one IO unit 204. These units can transmit and receive data between them with a remote IO terminal bus 208.

### B. Configuration of PLC 100

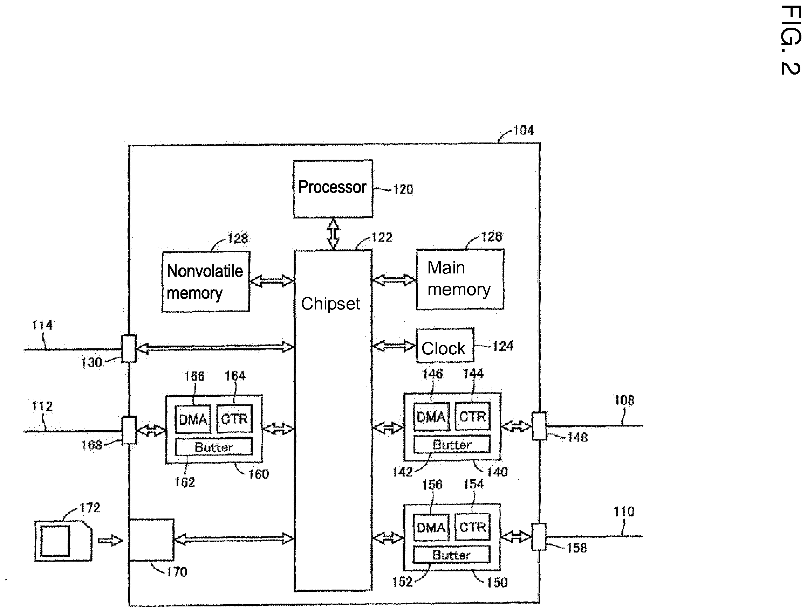

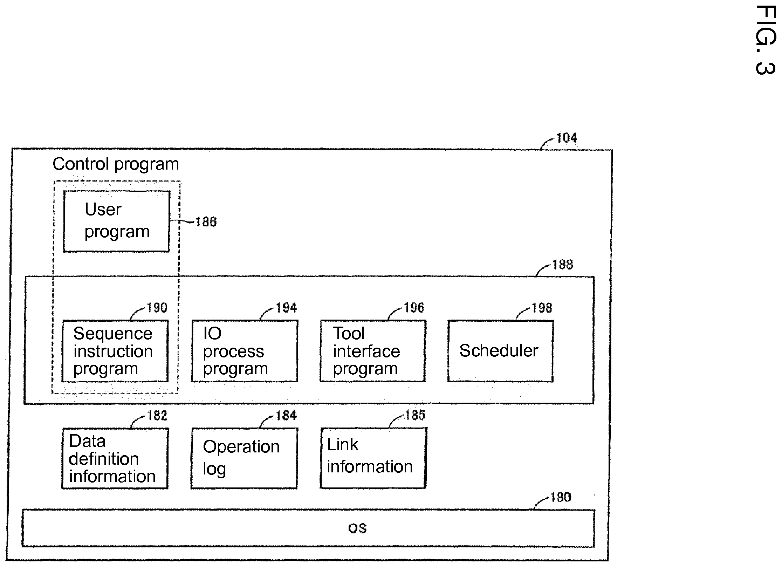

The configuration of the PLC 100 according to the present embodiment will now be described. Fig. 2 is a schematic diagram showing the hardware configuration including the main components of the PLC 100 according to the present embodiment. Fig. 3 is a schematic diagram showing the software configuration of the PLC 100 according to the present embodiment.

With reference to Fig. 2, the hardware configuration of the CPU 104 included in the PLC 100 will be described. The CPU 104 includes a processor 120, a chipset 122, a system clock 124, a main memory 126, a nonvolatile memory 128, a USB connector 130, a PLC system bus controller 140, a field bus controller 150, an upper communication controller 160, and a memory card interface 170. The chipset 122 and other components are connected to each other with various buses.

The processor 120 and the chipset 122 are typically designed in accordance with a general-purpose computer architecture. In other words, the processor 120 interprets and executes instruction codes sequentially provided from the chipset 122 in accordance with an internal clock. The chipset 122 transmits and receives internal data to and from various components connected to the chipset 122, and generates instruction codes intended for the processor 120. The system clock 124 generates a system clock with a predetermined period, and provides the system clock to the processor 120. The chipset 122 is capable of caching data obtained by executing computational processing in the processor 120.

The CPU 104 includes the main memory 126 and the nonvolatile memory 128 as storage units. The main memory 126 is a volatile storage area. The main memory 126 stores various programs to be executed in the processor 120, and is used as a working memory in executing various programs. The nonvolatile memory 128 stores an operating system (OS), a system program, the user program, data definition information, and log information in a nonvolatile manner.

The USB connector 130 is an interface that allows connection between the support apparatus 300 and the CPU 104. Through the USB connector 130, executable programs transferred from the support apparatus 300 are typically read into the CPU 104.

The CPU 104 includes the PLC system bus controller 140, the field bus controller 150, and the upper communication controller 160 as communication units. These communication circuits are responsible for transmitting and receiving data.

The PLC system bus controller 140 controls transmission and reception of data with the PLC system bus 108. More specifically, the PLC system bus controller 140 includes a buffer memory 142, a PLC system bus control circuit 144, and a dynamic memory access (DMA) control circuit 146. The PLC system bus controller 140 is connected to the PLC system bus 108 with a PLC system bus connector 148.

The field bus controller 150 includes a buffer memory 152, a field bus control circuit 154, and a DMA control circuit 156. The field bus controller 150 is connected to the field bus 110 with a field bus connector 158. The upper communication controller 160 includes a buffer memory 162, an upper communication control circuit 164, and a DMA control circuit 166. The upper communication controller 160 is connected to a network 112 with an upper communication connector 168.

The memory card interface 170 allows connection between a memory card 172, which is attachable to the CPU 104, and the processor 120.

Referring now to Fig. 3, the software configuration for implementing various functions provided by the PLC 100 according to the present embodiment will be described. An instruction code included in the software is read at an appropriate timing, and is executed by the processor 120 included in the CPU 104.

As shown in Fig. 3, the software to be executed in the CPU 104 includes three levels of hierarchy, namely, an OS 180, a system program 188, and a user program 186.

The OS 180 provides a basic environment for the processor 120 to execute the system program 188 and the user program 186.

The system program 188 is a group of software programs for implementing the basic functions of the PLC 100. More specifically, the system program 188 includes a sequence instruction program 190, an input and output (IO) process program 194, a tool interface processing program 196, and a scheduler 198.

In contrast, the user program 186 is freely created in accordance with a control purpose intended for a control target. In other words, the user program 186 is freely designed in accordance with a production line (process) to be controlled using the control system 1.

The user program 186 achieves the control purpose intended by the user, in collaboration with the sequence instruction program 190. In other words, the user program 186 uses instructions, functions, or functional modules provided by the sequence instruction program 190 to implement a programmed operation. Thus, the user program 186 and the sequence instruction program 190 may be collectively referred to as control programs.

Data definition information 182 includes a definition for handling data to be referred to (input data, output data, and internal data) in executing, for example, the user program 186 as a unique variable. When any predetermined event occurs during execution of the system program 188 and the user program 186, an operation log 184 stores information about the event in association with time information. More specifically, the operation log 184 stores various information resulting from execution of the system program 188 and/or the user program 186 as a log (history information). Link information 185 links a predetermined event with a designated variable associated with the event.

Each program will now be described in more detail.

The sequence instruction program 190 includes a group of instruction codes used in execution of the user program 186 for calling an entity of a sequence instruction designated in the user program 186 and implementing the instruction.

The IO process program 194 manages reception of input data and transmission of output data among the IO units 106 and various filed devices.

The tool interface processing program 196 provides an interface that allows transmission and reception of data to and from the support apparatus 300.

The scheduler 198 generates a thread or a procedure for executing the control program in accordance with a predetermined priority or the value of a system timer.

As described above, the user program 186 is created in accordance with the control purpose intended by the user (e.g., a target line or process). The user program 186 is typically in the format of an object program executable by the processor 120 included in the CPU 104. The user program 186 is generated by compiling a source program written in the ladder format or the functional block format using the support apparatus 300 or another apparatus. The generated user program in the format of an object program is transferred from the support apparatus 300 to the CPU 104, and is stored into, for example, the nonvolatile memory 128.

### C. Configuration of Support Apparatus 300

The support apparatus 300 according to the present embodiment will now be described. The support apparatus 300 supports use of the CPU 104 included in the PLC 100, and provides functions associated with the PLC 100, including settings of parameters, programming, monitoring, and debugging.

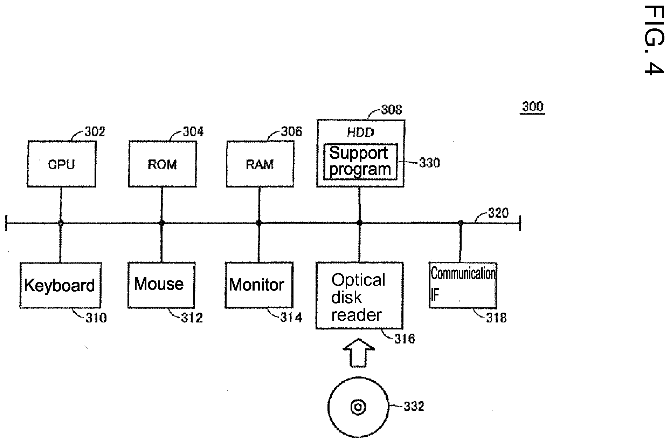

Fig. 4 is a schematic diagram showing the hardware configuration of the support apparatus 300 connected to the PLC 100. The support apparatus 300 is typically a general-purpose computer.

As shown in Fig. 4, the support apparatus 300 includes a CPU 302, which executes various programs including an OS, a read only memory (ROM) 304, which stores a basic input/output system (BIOS) and various data, a random access memory (RAM) 306, which provides a working area to store data in executing programs in the CPU 302, and a hard disk drive (HDD) 308, which stores programs to be executed in the CPU 302 in a nonvolatile manner. More specifically, the HDD 308 stores a support program 330 for implementing the functions of the support apparatus 300.

The support apparatus 300 further includes a keyboard 310 and a mouse 312 for receiving operations performed by the user and a monitor 314 for presenting information to the user. The support apparatus 300 further includes a communication interface (IF) 318 that allows communication with the PLC 100 (CPU 104) and other units.

The support program 330 or another program executed in the support apparatus 300 is stored in an optical recording medium 332 and is distributed. The program stored in the optical recording medium 332 is read by an optical disk reader 316, and is stored into the HDD 308 or other memory. The program may also be downloaded from an upper host computer with a network.

### D. Overview of Log Output Function

The log output function provided by the control system 1 according to the present embodiment will now be described. The log output function according to the present embodiment enables output of a log indicating the location and the processing designated freely in the user program 186 (hereafter also referred to as a debug log), in addition to a log that is output in accordance with execution of a normal program (hereafter also referred to as an execution log), and a log that is output in accordance with a failure to execute a program or a hardware fault (hereafter also referred to as an event log). The operation log 184 includes all of these logs.

The event log is information that associates information about the processing with time information when, for example, execution of the designated processing fails. For a typical event log, information about the processing is logged when, for example, the designated processing is suspended by an error.

When detecting a predetermined event, the CPU 104 executes the system program 188 to record information about the event (event log), time information, and the current value of a variable set in the link information 185 in association with one another. The CPU 104 stores the value of the variable set in the link information 185 and designated by the user into a predetermined area of the nonvolatile memory 128 at a predetermined timing designated by the user. The nonvolatile memory 128 functions as a ring buffer, and cyclically stores variable values. In response to occurrence of a predetermined event, the CPU 104 stores variable values recorded during a time period set by the link information 185 for variable values stored sequentially from the reference time when the event occurs.

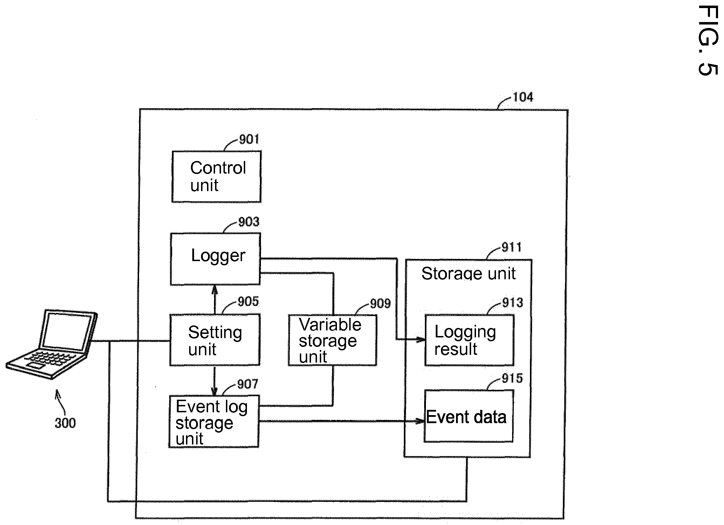

Fig. 5 is a block diagram describing the log output function of the CPU 104 according to the present embodiment. As shown in Fig. 5, the CPU 104 functions as a control unit 901, a logger 903, a setting unit 905, an event log storage unit 907, a variable storage unit 909, and a storage unit 911. The storage unit 911 stores a logging result 913 and event data 915.

The control unit 901 controls the entire operation of the PLC 100. The control unit 901 controls the operation of the entire system including program execution, data communication via a field network, an upper network, and buses, and self-diagnosis of the PLC 100. The control unit may monitor devices for errors, or may receive error information from devices connected to the control unit.

The logger 903 cyclically stores the values of variables set in accordance with the setting performed by the setting unit 905 and received from the support apparatus 300 into the storage unit 911. When detecting a predetermined event, the logger 903 stores, into the logging result 913, the variable values that have been stored cyclically.

When detecting an event, the event log storage unit 907 stores the type of the event and time information in association with each other into the storage unit 911. When detecting an event set by the setting unit 905, the event log storage unit 907 accesses the variable storage unit 909, reads the current value of a variable, and stores the current value of the variable in addition to the event type and the occurrence time of the event into the storage unit 911. The event log storage unit 907 further stores an address at which the logger 903 stores data in the logging result 913 as address link information.

The setting unit 905 receives the setting of information about an event to be recorded as an event log from the support apparatus 300. The setting unit 905 further receives designation of a variable to be logged from the support apparatus 300. The setting unit 905 sets the variable to be recorded in association with the variable value for the logger 903 and the event log storage unit 907.

### E. Data Structure of Link Information 185

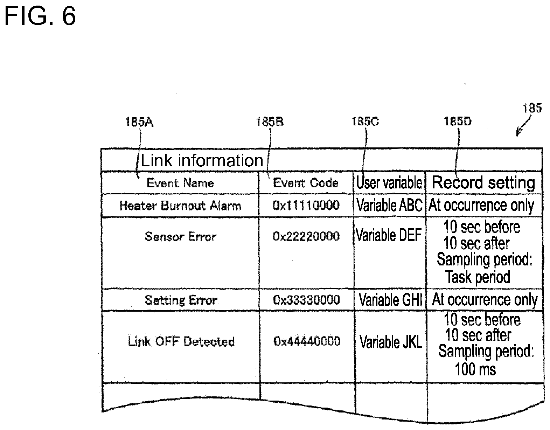

Referring now to Fig. 6, the data structure of the link information 185 will be described.

Fig. 6 is a diagram showing the link information 185. As shown in Fig. 6, each record in the link information 185 includes an event name 185A, an event code 185B, which is identification information for identifying the corresponding event, a variable 185C, and a record setting 185D.

The event name 185A indicates the name of a predetermined event (e.g., execution of a normal program, a failure to execute a program, or a hardware fault).

The event code 185B is information for identifying each event.

The variable 185C shows a variable associated with the event designated by the user.

The record setting 185D indicates the range of the time indicated by time information at which the value of the variable designated by the user is to be displayed on the monitor 314. For example, the record setting 185D includes a setting indicating that the variable value at the occurrence time of the event indicated by the time information is to be displayed (Record setting: at the event occurrence only), the variable value at predetermined times before and after the occurrence time of the event indicated by the time information is to be displayed (Record setting: X sec before the event occurrence, or X sec after the event occurrence (where X is any number).

### F. User Interface (Setting of Link Information 185)

The user interface used for the setting of the link information 185 will now be described. The user interface is provided by the support apparatus 300 according to the present embodiment.

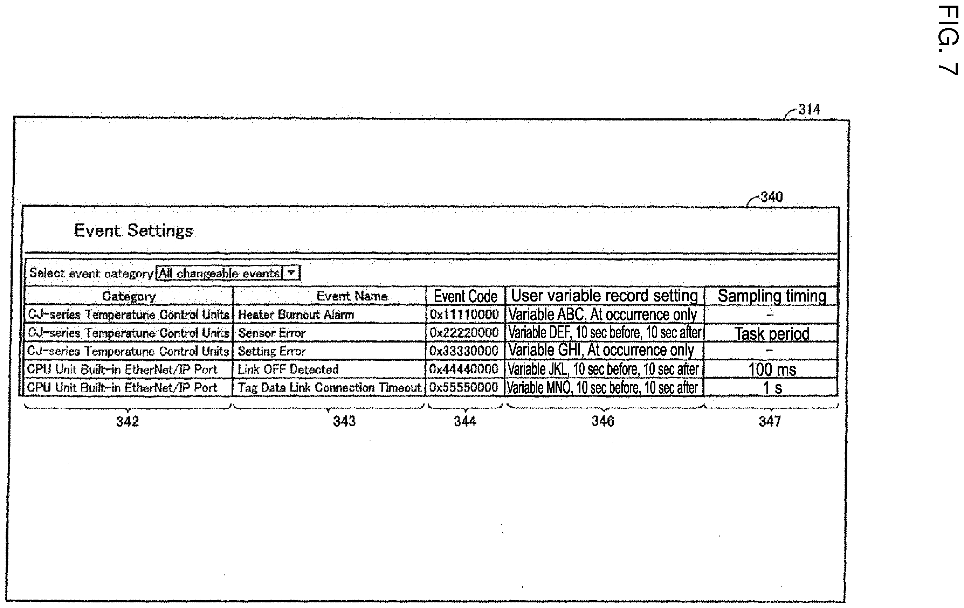

Fig. 7 is a diagram describing an example user interface for receiving an input operation to edit the link information 185 included in the support apparatus 300 according to the present embodiment.

As shown in Fig. 7, the support apparatus 300 displays a setting screen 340 on the monitor 314. The setting screen 340 prompts designation of the variable from the user for each predetermined event, and prompts the user to set the range of the time indicated by the time information for displaying the variable value using the setting screen 340.

A category 342 indicates the category including each predetermined event. The category indicates, for example, each unit included in the controller.

An event name 343 indicates the name of each predetermined event.

An event code 344 is information for identifying each event.

A setting 346 indicates a variable associated with each event and the range of the time indicated by the time information for displaying the value of the variable from the reference time corresponding to the time information of the event. When, for example, the setting 346 indicates the occurrence time only, the monitor 314 displays the event name 343 and the variable value at substantially the same as the occurrence time of the event code 344 indicated by the time information. When the setting 346 indicates 10 sec before and 10 sec after the event occurrence, the event is associated with the event name 343 and the variable value for a period of 10 sec before and a period of 10 sec after the occurrence time of the event code 344 indicated by the time information. In this manner, the support apparatus 300 receives the input operation for editing the correspondence between the event and the designated variable, and generates the link information 185 in response to the input operation. The support apparatus 300 transmits the generated link information 185 to the PLC100. The PLC 100 receives the link information 185 from the support apparatus 300, and stores the link information 185 into the memory card 172 or other memory. When the PLC 100 receives a request for the operation log 184 from the support apparatus 300, the PLC 100 transmits the operation log 184 and the link information 185 to the support apparatus 300.

When the sampling result of the variable value before and after the event is to be displayed on the monitor 314, the sampling timing 347 indicates the setting of the sampling timing. The sampling timing may be the timing in accordance with a task period or the timing designated by the user (e.g., every 100 ms).

### G. Processing

The processing implementing the log output function of the PLC 100 according to the present embodiment will now be described.

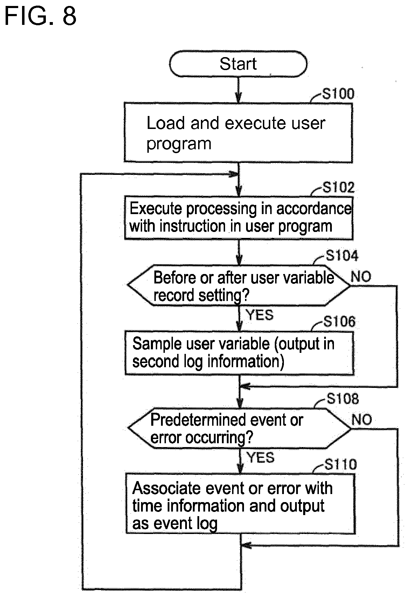

Fig. 8 is a flowchart showing the processing performed by the PLC 100 according to the present embodiment. The processor 120 included in the CPU 104 separately executes the user program 186 and the system program 188 to implement the steps shown in Fig. 8. Although the user program 186 and the system program 188 are executed independently of each other, these programs may be integrated into a single program and executed.

Referring now to Fig. 8, when the user program 186 is executed, the processor 120 loads the prestored user program 186, and repeatedly executes the loaded user program 186 in every predetermined period (step S100). The loaded user program 186 has been compiled into the format of an executable object. However, the loaded user program 186 may be the source code, or may be the intermediate code into which the user program 186 has been compiled. In such cases, the processor 120 executes the processing while the loaded code is being compiled sequentially.

In other words, the processor 120 calls the system program 188 as appropriate in accordance with an instruction included in the user program 186, and executes the designated processing (step S102).

When the program is executed to sample the variable values before and after the event under the setting to record the variable designated by the user, and the current time is this sampling timing (Yes in step S104), the processor 120 cyclically stores the designated variable values into the nonvolatile memory at the sampling timing.

When a predetermined event such as an error occurs during this program execution (Yes in step S108), the processor 120 associates information about the event, such as an error, with time information and the current value of the variable, and outputs the information as an event log (step S110).

When the series of user program 186 is executed completely, the processing in step S102 and subsequent steps is repeated.

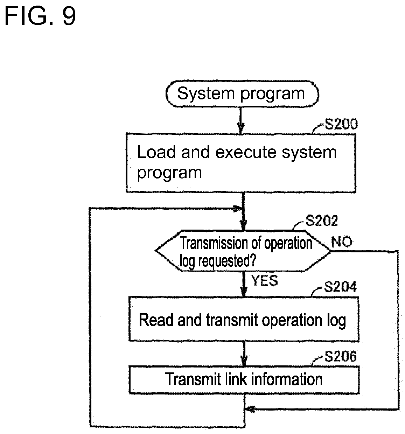

Fig. 9 is a flowchart showing the processing performed by the PLC 100 according to the present embodiment.

Referring now to Fig. 9, to execute the system program 188, the processor 120 loads the prestored system program 188, and repeatedly executes the loaded system program 188 in every predetermined period (step S200). The loaded system program 188 has been compiled into the format of an executable object. Like the user program 186, the loaded system program 188 may be the source code, or may be the intermediate code into which the program has been compiled.

The processor 120 determines whether the support apparatus 300 has requested transmission of the operation log 184 (step S202). When the support apparatus 300 has requested transmission of the operation log 184 (Yes in step S202), the processor 120 reads the stored operation log 184 and transmits the operation log 184 to the support apparatus 300 (step S204). In step S206, the processor 120 transmits the link information 185 to the support apparatus 300.

In other words, the processing in steps S202, S204, and S206 is to be performed when the support apparatus 300 has requested the operation log 184.

When the series of system program 188 is executed completely, the processing in step S202 and subsequent steps is repeated.

### H. User Interface (Log Display)

The user interface through which the operation log provided by the support apparatus 300 according to the present embodiment is obtained and displayed will now be described. The support apparatus 300 displays the event log included in the operation log 184 on the monitor 314. The user can check the event log through the user interface displayed in the support apparatus 300. The support apparatus 300 provides the user interface that displays information stored in the storage unit (memory card 172 or other memory) of the PLC 100 chronologically.

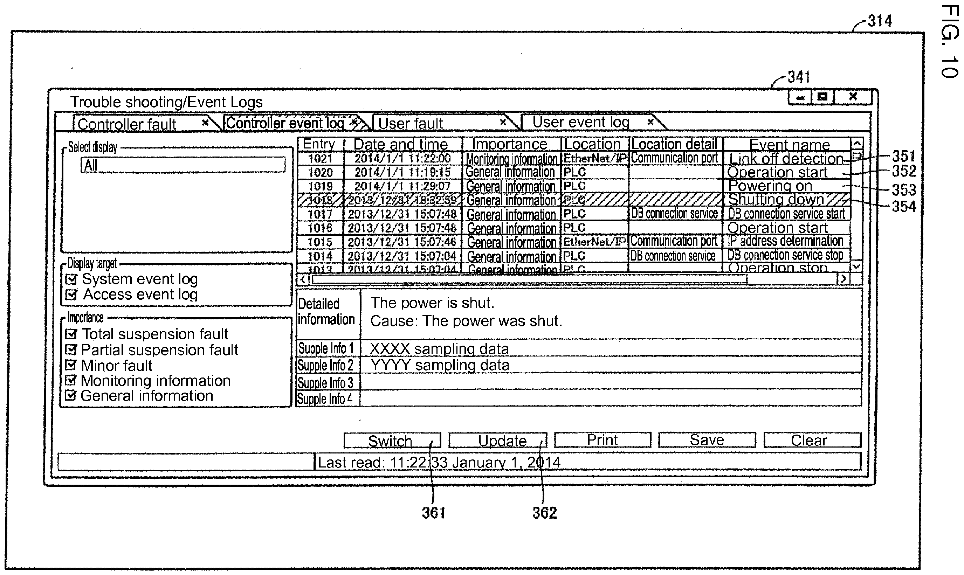

Fig. 10 is a diagram showing an example user interface for obtaining and displaying the operation log 184 included in the support apparatus 300 according to the present embodiment.

When the user performs an input operation of pressing an update button 362 on a user interface screen 341 shown in Fig. 10, the operation log 184 and the link information 185 are obtained from the PLC 100 connected to the support apparatus 300. The operation log 184 and the link information 185 are transmitted from the PLC 100 to the support apparatus 300 basically via the USB connector 130. However, the log and the information may be transmitted via a network using a file transfer protocol (FTP) server function or a hypertext transfer protocol (HTTP) server function provided by the PLC 100.

The user interface screen 341 shown in Fig. 10 displays the event logs chronologically. For example, the operation logs shown in Fig. 10 include a log 354 with an entry of 1018, which is generated with the event name "shutting down."

More specifically, each log includes items such as the entry, the date and time, importance, the location, the location detail, and the event name. The date and time indicates when the corresponding event occurs. The entry is information for identifying each log. The date and time is information about the time at which each event occurs in the event log. The importance indicates the degree of importance of each event. The location indicates the location at which each event occurs, or specifically, for example, the entire device or a unit. The location detail indicates more detailed information about the location (e.g., a component or a process). The event name is information for identifying each event. For example, a log 351 with an entry of 1021 has the event name "link off detection." A log 352 with an entry of 1020 has the event name "operation start." A log 353 with an entry of 1019 has the event name "powering on."

In the example shown in Fig. 10, the log 354 with the entry of 1018 is selected by the input operation performed by the user. The support apparatus 300 refers to the link information 185. When the link information 185 links the variable associated with the event with the entry selected by the user, the support apparatus 300 displays information indicating the variable as supplementary information on the user interface screen 341.

When receiving an input operation performed on a display switch button 361 on the screen where the log is selected (the log 354 is selected), the support apparatus 300 displays the value of any variable associated with the event (event name) indicated by the selected log.

As described above, the support apparatus 300 obtains the operation log 184 from the PLC 100, and displays information about the event logged using the operation log 184 onto the monitor 314. The support apparatus 300 further displays, on the monitor 314, information indicating the variable linked to the information about the event logged using the operation log 184 based on the link information 185.

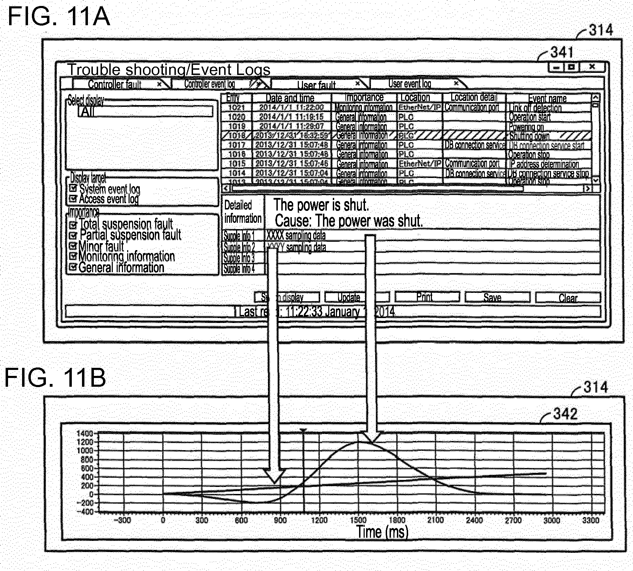

Figs. 11A and 11B are diagrams showing changes in the user interface screen. Fig. 11A is a diagram showing the user interface screen 341. In the user interface screen 341 shown in Fig. 11A, the support apparatus 300 refers to the link information 185, and displays information indicating a variable as supplementary information for any logged event (event name) associated with the variable. When receiving an input operation performed on the display switch button 361, the support apparatus 300 displays variable values associated with the corresponding event (event name). Fig. 11B is a diagram showing an example for displaying variable values associated with the corresponding event. In Fig. 11B, the user interface screen 352 displays variable values included in the debug log for a certain period of time before and after the logged time of the event indicated by time information for variables associated with the event (e.g., supplementary information 1 and supplementary information 2).

### I. Advantageous Effects

The PLC 100 in the control system 1 according to the present embodiment automatically outputs event logs, which allow the user to later refer to the operation logs stored chronologically. The PLC 100 stores the link information 185. When the support apparatus 300 requests the operation log 184 from the PLC 100, the PLC 100 transmits the operation log 184 together with the link information 185 to the support apparatus 300. The support apparatus 300 displays the event log included in the operation log 184 on the monitor 341, and also displays, onto the monitor 341, any designated variable associated with the event included in the operation log 184. The link information 185 shows the correspondence between the event and user variables defined by the user. When referring to the event log later, the user can easily check the user variable values associated with the event.

When a predetermined event occurs (e.g., a program failure or shutting down) occurs, the above structure allows the user to identify a cause of the event easily. This allows efficient debugging or integrity checking of programs.

The embodiments disclosed herein are only illustrative in all respects and should not be construed to be restrictive. The scope of the invention is designated by the appended claims, and it is intended that all changes are contained in the claims and equivalent meanings and ranges.

### REFERENCE SIGNS LIST

- 1: control system
- 10: detection switch
- 20: relay
- 30: servo motor driver
- 32: motor
- 100: PLC
- 102: power supply unit
- 104: CPU
- 106: IO unit
- 108: PLC system bus
- 110: field bus
- 112: network
- 114: connection cable
- 120: processor
- 122: chipset
- 124: system clock
- 126: main memory
- 128: nonvolatile memory
- 130: USB connector
- 140: PLC system bus controller
- 142, 152, 162: buffer memory
- 144: PLC system bus control circuit
- 146, 156, 166: DMA control circuit
- 148: PLC system bus connector
- 150: field bus controller
- 154: field bus control circuit
- 158: field bus connector
- 160: upper communication controller
- 164: upper communication control circuit
- 168: upper communication connector
- 170: memory card interface
- 172: memory card
- 180: OS
- 182: data definition information
- 184: operation log
- 1842: log file
- 186: user program
- 188: system program
- 190: sequence instruction program
- 194: IO process program
- 196: interface processing program
- 198: scheduler
- 200: remote IO terminal
- 202: communication coupler
- 208: terminal bus
- 300: support apparatus
- 302: CPU
- 304: ROM
- 306: RAM
- 308: hard disk
- 310: keyboard
- 312: mouse
- 314: monitor
- 316: optical disk reader
- 330: support program
- 332: optical recording medium
- 400: database device

## Claims

1. A control system, comprising:
a controller configured to execute a user program periodically or as an occasional event; and
an information processing device connectable to the controller,
the controller including
a first storage unit configured to store link information linking a predetermined event to a variable associated with the event,
a first writing unit configured to write first log information in association with time information into the first storage unit in response to occurrence of the predetermined event, the first log information including information about the event, and a current value of a predetermined variable associated with the event included in the link information, and
a second writing unit configured to write second log information in association with time information into the first storage unit in accordance with a predetermined period, the second log information including information about a value of the predetermined variable,
the information processing device including
a communication unit configured to obtain the first log information and the second log information from the controller,
a monitor configured to display information,
a second storage unit configured to store the link information, and
a control unit configured to control an operation of the information processing device,
the control unit including
a log display unit configured to display the first log information obtained from the communication unit onto the monitor, the first log information including the information about the event, and the value of the predetermined variable associated with the event at occurrence of the event indicated by the link information, and
a link display unit configured to display, based on the link information and the second log information, information indicating the value of the predetermined variable linked to the information about the event included in the first log information onto the monitor.

2. The control system according to claim 1, wherein
the control unit in the information processing device includes a link information generator configured to generate the link information in response to an input operation for editing a correspondence between the event and designation of the variable, and
the control unit transmits the link information generated by the communication unit to the controller,
the controller receives the link information from the information processing device and stores the link information,
the controller transmits the first log information, the second log information, and the link information to the information processing device when receiving a request for the first log information, the second log information, and the link information from the information processing device, and
the control unit in the information processing device receives the link information from the controller, and stores the received link information into the second storage unit.

3. The control system according to claim 1 or claim 2, wherein
the link display unit in the information processing device displays the value of the variable linked to the information about the event included in the first log information onto the monitor in response to an input operation for displaying the value of the variable.

4. The control system according to any one of claims 1 to 3, wherein
the link information includes a range of time information associated with the value of the variable linked to the event,
the control unit generates the link information including the range of time information associated with the value of the variable linked to the event, in response to an input operation for editing a correspondence between the event and designation of the variable, and
the link display unit displays, onto the monitor, the value of the variable linked to the information about the event in accordance with the range of time information included in the link information.

5. A method for displaying a log of a control system, the control system including a controller configured to execute a user program periodically or as an occasional event, and an information processing device connectable to the controller,
the controller including a first storage unit configured to store link information linking a predetermined event to a variable associated with the event,
the information processing device including a second storage unit configured to store the link information and a monitor,
the method comprising:
causing the controller to write first log information in association with time information into the first storage unit in response to occurrence of the predetermined event, the first log information including information about the event, and a current value of a predetermined variable associated with the event included in the link information;
causing the controller to write second log information in association with time information into the first storage unit in accordance with a predetermined period, the second log information including information about a value of the predetermined variable;
causing the information processing device to obtain the first log information and the second log information from the controller;
causing the information processing device to display the first log information obtained from the communication unit onto the monitor, the first log information including the information about the event, and the value of the predetermined variable associated with the event at occurrence of the event indicated by the link information; and
causing the information processing device to display, based on the link information and the second log information, information indicating the value of the predetermined variable linked to the information about the event included in the first log information onto the monitor.

6. An information processing device for a control system including a controller configured to execute a user program periodically or as an occasional event, the information processing device being connectable to the controller,
the controller including a first storage unit configured to store link information linking a predetermined event to a variable associated with the event, a first writing unit configured to write first log information in association with time information into the first storage unit in response to occurrence of the predetermined event, the first log information including information about the event, and a current value of a predetermined variable associated with the event included in the link information, and a second writing unit configured to write second log information in association with time information into the first storage unit in accordance with a predetermined period, the second log information including information about a value of the predetermined variable,
the information processing device comprising:
a communication unit configured to obtain the first log information and the second log information from the controller;
a monitor configured to display information;
a second storage unit configured to store the link information; and
a control unit configured to control an operation of the information processing device,
the control unit including
a log display unit configured to display the first log information obtained from the communication unit onto the monitor, the first log information including the information about the event, and the value of the predetermined variable associated with the event at occurrence of the event indicated by the link information, and
a link display unit configured to display, based on the link information and the second log information, information indicating the value of the predetermined variable linked to the information about the event included in the first log information onto the monitor.

7. A program for controlling an operation of an information processing device in a control system including a controller configured to execute a user program periodically or as an occasional event, the information processing device being connectable to the controller,
the controller including a first storage unit configured to store link information linking a predetermined event to a variable associated with the event, a first writing unit configured to write first log information in association with time information into the first storage unit in response to occurrence of the predetermined event, the first log information including information about the event, and a current value of a predetermined variable associated with the event included in the link information, and a second writing unit configured to write second log information in association with time information into the first storage unit in accordance with a predetermined period, the second log information including information about a value of the predetermined variable,
the information processing device including a second storage unit, a processor, and a monitor, the second storage unit being configured to store link information linking the event and designation of the variable,
the program causing the processor to implement:
obtaining the first log information and the second log information from the controller;
displaying the information about the event included in the obtained first log information; and
displaying, based on the link information and the second log information, information indicating the value of the variable linked to the information about the event included in the first log information onto the monitor.
